Europäisches Patentamt

**European Patent Office**

Office européen des brevets

(11) Numéro de publication: **0 143 015**

**A1**

(12) ## DEMANDE DE BREVET EUROPEEN

(21) Numéro de dépôt: **84401819.2**

(22) Date de dépôt: **13.09.84**

(51) Int. Cl.⁴: **B 32 B 18/00**
**B 28 B 1/26, C 04 B 38/00**

(30) Priorité: **15.09.83 FR 8314718**

(43) Date de publication de la demande:
**29.05.85 Bulletin 85/22**

(84) Etats contractants désignés:
**AT BE CH DE FR GB IT LI LU NL SE**

(71) Demandeur: **LAFARGE COPPEE**
**28, rue Emile Ménier**
**F-75782 Paris Cedex 16(FR)**

(72) Inventeur: **Relave, Christian**
**chemin des Catalins**
**F-26200 Montelimar(FR)**

(72) Inventeur: **Cottin, Bernard**
**rue du Dauphiné**
**F-26200 Montelimar(FR)**

(72) Inventeur: **Robin, Bernard**
**10, rue Paul Nègre**
**F-26200 Montelimar(FR)**

(74) Mandataire: **Phélip, Bruno et al,**
**c/o Cabinet Harlé & Phélip 21, rue de la Rochefoucauld**
**F-75009 Paris(FR)**

(54) **Produit céramique allégé, isolant, imperméable et procédé d'obtention.**

(57) Procédé d'obtention d'un produit céramique allégé, selon lequel on revêt les parois internes d'un moule d'une couche de barbotine dépourvue d'agent de formation d'alvéoles, cette couche, ayant de préférence une épaisseur de 5 à 12 mm, on la fait durcir, puis on remplit le reste du moule avec un mélange de même composition mais contenant un agent de formation d'alvéoles, ensuite on fait durcir le contenu du moule, on le démoule on le sèche et on le cuit, et éventuellement on vitrifie ou émaille sa surface. Avantageusement, on utilise un moule dont une partie au moins est poreuse, on le remplit avec une barbotine, auquel cas la partie de celle-ci située au voisinage de la paroi poreuse du moule se raffermit par absorption de l'eau de la barbotine par cette paroi, puis on évacue la fraction de la barbotine qui se trouvait écartée de la paroi poreuse et n'a pas raffermi.

EP 0 143 015 A1

1

<u>" Produit céramique allégé, isolant, imperméable et procédé d'obtention"</u>

La présente invention concerne un nouveau produit céramique et son procédé d'obtention.

Il existe des besoins de plus en plus grands de disposer de matériaux qui présentent, à la fois, une bonne isolation thermique, une bonne imperméabilité, une bonne résistance aux diverses agressivités qu'elles soient chimiques ou physiques, et des résistances mécaniques élevées; ces qualités doivent se conserver sur des gammes étendues de températures (qui peuvent aller des températures cryogéniques aux températures réfractaires). Dans d'autre cas, en particulier dans l'industrie céramique, on a aussi besoin de produits plus légers conservant les autres propriétés des produits denses.

On connaît des matériaux qui sont de bons isolants thermiques: les bétons réfractaires isolants, les mousses de matières plastiques (polystyrène expansé, mousse de polyuréthane...), les mousses céramiques et autres.

Mais habituellement, ces matériaux ne répondent pas aux autres qualités requises :

- Pour assurer l'imperméabilité d'un béton ou d'une céramique, on les recouvre d'un produit qui les rend imperméables : métal, vernis, émail ou bien on les imprègne de produits polymérisables.

- Les matières plastiques ne supportent généralement ni des températures très basses, ni des températures très élevées.

L'invention fournit un produit qui ré-

MJB
7500 EU

2

pond à ces exigences. Le produit est une céramique alvéolée, isolante dont une partie au moins
de la surface est constituée d'une peau, en céramique dense, imperméable, l'ensemble du produit
ayant subi, au moins, une cuisson à une température suffisante pour rendre la peau imperméable par
frittage ou vitrification plus ou moins complets
de ses composants.

La partie alvéolée du produit est constituée d'un matériau céramique ayant une porosité
supérieure à 20% et de préférence supérieure à
50%.

Par matière céramique, il faut entendre ici les matières obtenues, par cuisson à une
température au moins égale à leur température de
frittage, et en tout cas supérieure à la température d'utilisation, à partir d'oxydes métalliques
ou de leurs mélanges, mais aussi éventuellement
d'autres composés tels que des carbures, nitrures, siliciures, borures, etc....

A titre de référence bibliographiques
décrivant des matières céramiques utilisables selon l'invention, on peut citer les ouvrages
Giovanni ALIPRANDI - Matériaux réfractaires et
céramiques techniques - Eléments de Céramurgie
et de Technologie, Editions Septima 1979, pages
11 à 14 et Phase diagrams for Ceramics, de LEVIN,
robbins et McMURDIE, Editions American Ceramic
Society, 2ème Edition, 1964 avec compléments ultérieurs.

De telles matières procurent par elles-mêmes, si elles sont convenablement choisies
en fonction des utilisations auxquelles elles
sont destinées, de remarquables résistances aux diverses agressions physiques ou chimiques. La porosité de la partie alvéolée est choisie en fonction des qualités d'isolation thermique désirées. Cette porosité a pour conséquence une réduction de poids qui est précieuse dans certaines applications, particulièrement dans la manipulation de produits volumineux.

Elle a, encore, pour conséquence une modification des propriétés mécaniques par rapport au matériau dense, due à la limitation de la propagation de la déformation du matériau par création de barrières à la fissuration; en particulier, la résistance aux chocs est grandement améliorée.

La porosité de la partie alvéolée peut ne comporter qu'une seule famille d'alvéoles par exemple de diamètre compris entre 0,5 et 5 mm ou entre 0,05 mm et 0,5 mm ce qui est facile à obtenir avec un seul agent d'obtention d'alvéoles. Pour les adapter à des usages particuliers d'isolation ou d'allègement on peut mettre en oeuvre des produits dont la partie alvéolée comporte plusieurs familles d'alvéoles, auquel cas il convient d'utiliser simultanément plusieurs méthodes ou agents différents d'obtention d'alvéoles. On notera également que, dans la présente description, lorsqu'on donne des indications sur les diamètres des alvéoles; il s'agit bien entendu de données statistiques. On sait en effet que lors de la production des matières céramiques alvéolées, les dimensions des alvéoles se répartissent selon les lois de la statistique. L'indication d'une gamme de diamètres signifie seulement que, en majorité, les alvéoles appartiennent à cette gamme, mais cela n'exclut nullement que la matière con-

4

tienne des alvéoles ayant d'autres diamètres pris hors de cette gamme.

L'épaisseur de la peau est un élément important de la qualité du produit. Sa valeur optimale dépend de divers facteurs, dont le mode de fabrication et les particularités de l'utilisation. Une peau trop mince risque d'être endommagée au cours de la fabrication du produit, ou de ses manipulations, ou encore pendant l'utilisation. Une peau trop épaisse augmente le poids et entraîne une diminution de l'importance de la partie alvéolée et, par suite, des propriétés d'isolation thermique. En outre, on a constaté qu'en cas de choc affectant une faible partie de la surface, un produit à peau relativement épaisse risque de se fracturer ou se fissurer alors qu'un produit à peau plus mince subit une déformation locale sans fracture ou fissure.

On considère que, pour des produits industriels ayant par exemple la forme d'une plaque plane ou incurvée, avec une peau sur deux faces opposées, et une épaisseur totale comprise entre 40 et 400 mm, une peau ayant une épaisseur de 5 à 12 mm convient. Pour des produits plus petits, on soumet à de faibles contraintes extérieures, l'épaisseur de la peau peut être plus faible sans toutefois descendre au-dessous de 1 mm.

Pour obtenir un produit conforme à l'invention, il serait possible de préparer d'abord la partie alvéolée, puis de déposer sur celle-ci un revêtement destiné à former la peau. Cette manière d'opérer, qui est courante dans l'industrie céramique, pour l'obtention d'objets émaillés notamment, oblige à durcir d'abord la partie alvéolée, par cuisson ou séchage prolongé, de façon qu'elle puisse supporter le dépôt du revêtement, lequel exige plusieurs manipulations surtout s'il doit recouvrir toutes les faces du produit et le durcissement doit être d'autant plus poussé que la partie alvéolée est plus poreuse, donc plus fragile.

L'invention a pour objet un procédé nouveau, qui évite ces manipulations et en particulier supprime toute opération de durcissement intermédiaire et également un produit céramique allégé, isolant,imperméable obtenu par ledit procédé.

Selon ce procédé, on revêt les parois d'un moule d'une couche du matériau considéré sans agent de formation d'alvéoles, on la fait, si nécessaire durcir à froid, puis on termine le remplissage du moule avec le même matériau comprenant cette fois des alvéoles ou un agent de formation des alvéoles et après durcissement, puis démoulage, on soumet le tout à un traitement thermique destiné à procurer à la fois la solidité de l'ensemble du produit et l'imperméabilité de la peau.

La présente invention propose un procédé d'obtention d'un produit allégé, selon lequel on revêt les parois d'un moule d'une couche d'une barbotine dépourvue d'agent de formation d'alvéoles, puis on remplit le reste du moule avec un mélange de même composition mais contenant un agent de formation d'alvéoles, ensuite on fait durcir le contenu du moule, on le démoule on le sèche et on le cuit et éventuelllement on vitrifie ou émaille sa surface, qui est caractérisé en ce qu'on fait durcir ladite couche de mélange sans agents de formation d'alvéoles avant de remplir le reste du moule.

Pour durcir ladite couche de barbotine, on utilise un moule dont une partie au moins est poreuse, on le remplit avec une barbotine, auquel cas la partie de celle-ci située au voisinage de la paroi poreuse du moule se raffermit par absorption de l'eau de la barbotine par cette paroi, puis on évacue la fraction de la barbotine qui se trouvait écartée de la paroi poreuse et n'a pas raffermi.

On donne à la couche sans agent de formation d'alvéoles une épaisseur de 5 à 12 mm.

Pour sécher le produit, on le chauffe à une température de 30 à 120°C pendant un temps qui augmente avec l'épaisseur, et qui est de l'ordre de 1 jour pour un produit d'épaisseur totale 40 mm et ayant une couche dépourvue d'agent de formation de pores sur deux faces opposées, et de l'ordre de 20 jours pour un produit analogue d'épaisseur totale 70 mm à une température de 35°C.

Pour sécher le produit, on le chauffe à une température de 30 à 120°C en utilisant une technique de chauffage par micro-ondes.

Suivant une modalité intéressante de ce procédé, on utilise un moule dont une partie au moins est poreuse, on le remplit avec une barbotine, auquel cas la partie de celle-ci située au voisinage de la paroi poreuse du moule se raffermit par absorption de l'eau de la barbotine par cette paroi, puis on évacue la fraction de la barbotine qui se trouvait écartée de la paroi poreuse et n'a pas raffermi, après quoi on termine le remplissage du moule avec la même barbotine, mais allégée.

Le traitement thermique comprend un séchage, à une température de 30 à 120°C, suivi d'une cuisson à une température suffisante pour assurer un frittage à une fusion partielle de la matière.

Le séchage est nécessairement lent, du fait que la peau du produit est, à l'état non cuit, sinon imperméable, du moins compacte. Cela est surtout vrai si le produit comporte une peau sur la totalité ou la plus grande partie de la surface. Le temps de séchage dépend de l'épaisseur de la peau et de l'épaisseur du produit lui-même. Avec une épaisseur de peau de 5 à 12 mm, le temps de séchage, à une température de 35°C, est de l'ordre de 1 jour pour une épaisseur totale de 40 mm et de 20 Jours pour une épaisseur totale de 70 mm. Toutefois, l'utilisation de la technique du chauffage par micro-ondes permet de réduire considérablement ces durées, car elle procure des températures à la fois plus élevées et homogènes dans la masse.

La température de cuisson dépend du matériau utilisé. Pour les matières céramiques courantes elle est de l'ordre de 1250°C.

L'invention est illustrée sans être aucunement limitée par les exemples ci-après.

EXEMPLE 1

On a préparé une barbotine en mélangeant les matières premières suivantes :

| argile crue | 50% |
| argile cuite | 50% |
| eau | 28% par rapport au poids total des argiles |

Cette barbotine a été versée dans un moule en plâtre dont le vide comportant deux faces principales parallèles séparées par un intervalle de 70 mm. Au bout de 6 heures, on a vidé la barbotine qui se trouvait dans le moule, on a constaté qu'il restait sur les parois intérieures de celui-ci une couche de peau de 8 mm d'épaisseur, résultant de l'absorption de l'eau des parties superficielles de la barbotine dans le moule.

On a alors versé dans le moule un mélange formé de la même barbotine que ci-dessus additionnée de billes de polystyrène expansé de 1 à 2,5 mm de diamètre, à raison de 1000 cm$^3$ de billes pour 1000 g de barbotine. On a laissé raffermir le tout, 18 heures.

Le produit démoulé a été séché pendant 20 Jours à l'air, dans une étude à une température de 35°C. Ensuite il a été soumis à une cuisson comportant une montée en température à 200°C/h jusqu'à 1250°C et un palier d'une heure à cette température.

L'analyse chimique du produit cuit a donné le résultat suivant :

| | |
|---|---|
| $SiO_2$ | 65% |
| $Al_2O_3$ | 30% |
| $TiO_2$ | 1,5% |
| $Fe_2O_3$ | 1,8% |
| $K_2O$ | 0,7% |
| autres impuretés | 1% |

L'analyse minéralogique a montré des grains de chamotte et des grains de quartz cimentés par une phase vitreuse.

EXEMPLE 2

On a préparé une autre barbotine en mélangeant les matières premières suivantes :

| | |
|---|---|
| argiles | 50% |
| silice | 25% |
| feldspath | 25% |
| eau | 37% par rapport aux matières solides |

La granulométrie de la silice était donnée par le tableau ci-dessous :

| | |
|---|---|
| moins de 2 micromètres | 10% |
| moins de 6 micromètres | 30% |
| moins de 13 micromètres | 50% |
| moins de 25 micromètres | 80% |
| moins de 80 micromètres | 100% |

On a opéré de la même manière que pour l'exemple 1, on a constaté que dès 15 minutes, une peau de 5 mm s'était formée. On a poursuivi la mise en oeuvre du produit. Le raffermissement du coeur a demandé 4 heures.

Le séchage a été fait dans un four à micro-ondes, d'une puissance de 1 kw, il a duré 60 heures. La cuisson qui a suivi a été la même que pour l'exemple 1.

Les analyses et examens du produit cuit donnent les résultats suivants :

Analyse chimique :

| | |
|---|---|
| $SiO_2$ | 71% |
| $Al_2O_3$ | 23% |
| $Na_2O$ | 2,2% |
| $K_2O$ | 1,8% |
| autres impuretés | 2%. |

Analyse minéralogique :

| | |
|---|---|
| Mullite | 15-20% |

Quartz               15-20%

Phase vitreuse       65%

Pour la partie "peau"

Masse volumique apparente        2,3 g/cm$^3$

Porosité totale                  10%

Porosité ouverte                 0,5%

Module de rupture en flexion     50 MPa

Module de rupture en compression 420 MPa

Module d'élasticité statique     60 GPa

Pour la partie "alvéolée"

Masse volumique apparente        0,8 g/cm$^3$

Porosité totale                  68%

Coefficient de dilatation
          linéaire               $6 \times 10^{-6}$°C$^{-1}$

Conductivité thermique à 20°C    0,2 Wm$^{-1}$°K$^{-1}$

Conductivité thermique à 300°C   0,3 Wm$^{-1}$°K$^{-1}$

Conductivité thermique à 750°C   0,43 Wm$^{-1}$°K$^{-1}$

Module de rupture en flexion     5 MPa

Module de rupture en compression 20 MPa

Module d'élasticité statique     1,5 GPa

Résistance aux chocs

La résistance au choc est observée en laissant tomber sur le matériau une bille d'acier de 1 kg d'une hauteur de 36 cm.

Sur un produit en matériau céramique identique à la peau, la chute de la bille provoque une fracture en étoile du produit (semblable à l'impact d'un caillou sur du verre).

Sur le produit de l'exemple 2 (comportant 5 mm de peau plus alvéolée), on observe sur la peau un léger écrasement au point d'impact mais sans fracture ou finesse.

La peau étant une céramique classique a les mêmes propriétés de résistance aux agents agressifs physiques ou chimiques.

Le produit de l'exemple 2 immergé dans l'eau sous 65 bars à température ambiante, ne présente pas de reprise de poids après 23 Jours d'immersion.

Pour obtenir une meilleure imperméabilité, c'est-à-dire une porosité ouverte de la peau inférieure à 0,5%, on peut soit augmenter la phase vitreuse du produit, soit émailler celui-ci.

Bien entendu, le procédé de préparation du matériau de l'invention n'est pas limité au mode décrit ci-dessus.

La peau peut être obtenue autrement que par absorption, par exemple, en introduisant dans un moule, non poreux, une quantité de barbotine insuffisante pour le remplir, cette barbotine contenant un agent épaississant après quoi on déplace ou agite le moule pour que ses parois soient revêtues par la peau, là où on le désire. On peut aussi opérer par dépôt ou projection de matière sur une paroi du moule, notamment si le produit final ne doit pas avoir une peau sur la totalité de sa surface.

Bien sur, on peut obtenir le produit de l'invention par un procédé plus classique que celui qu'on a décrit, par exemple, en préparant le produit cru par dépôt de la matière de peau sur la partie alvéolée non cuite ou par d'autres procédés tels que électrophorèse ou par coextrusion de la matière de la peau et de la matière de la partie alvéolée.

En ce qui concerne la partie alvéolée, on a décrit dans les exemples l'obtention d'une porosité à l'aide de billes de polystyrène. Il existe d'autres procédés classiques d'obtention de porosité soit par introduction d'agents divers, en particules, qui disparaissent à la cuisson. On peut aussi créer des bulles dans la barbotine, additionnée avantageusement d'un stabilisant tensio-actif, ces bulles étant obtenues soit par introduction d'air sous forte agitation, soit par une réaction chimique ou physico-chimique. On peut aussi combiner les divers modes d'allègement décrits ci-dessus.

On peut ainsi obtenir la porosité voulue, la valeur désirée de cette porosité résultant d'un compromis entre les propriétés souhaitées d'isolation thermique et/ou de légèreté d'une part, et de résistances mécaniques d'autre part.

La surface externe du produit fini cuit peut comporter en totalité ou en partie la peau associée selon l'invention à la partie intérieure alvéolée. Le fait que la peau ne recouvre pas totalement celle-ci peut répondre à certains besoins pratiques et ne présente pas d'inconvénients à l'utilisation, étant donné que la partie "peau" et la partie alvéolée sont constituées du même matériau et ont donc un même comportement thermique.

Le matériau de l'invention et son procédé d'obtention seront avantageusement employés chaque fois qu'on aura besoin de produits :

- isolants thermiques et imperléables,

13

 - légers et imperméables
surtout s'ils doivent être utilisés dans des conditions sévères d'agressivité physique ou chimique.

  Un tel exemple d'application pratique
est celui des produits céramiques sanitaires.

14

## REVENDICATIONS

1. Procédé d'obtention d'un produit allégé, selon lequel on revêt les parois d'un moule d'une couche d'une barbotine dépourvue d'agent de formation d'alvéoles, puis on remplit le reste du moule avec un mélange de même composition mais contenant un agent de formation d'alvéoles, ensuite on fait durcir le contenu du moule, on le démoule, on le sèche et on le cuit, et éventuellement on vitrifie ou émaille sa surface, caractérisé en ce qu'on fait durcir ladite couche de mélange sans agent de formation d'alvéoles avant de remplir le reste du moule.

2. Procédé selon la revendication 1, caractérisé en ce que pour durcir ladite couche de barbotine, on utilise un moule dont une partie au moins est poreuse, on le remplit avec une barbotine, auquel cas la partie de celle-ci située au voisinage de la paroi poreuse du moule se raffermit par absorption de l'eau de la barbotine par cette paroi, puis on évacue la fraction de la barbotine qui se trouvait écartée de la paroi poreuse et n'a pas raffermi.

3. Procédé selon l'une des revendications 1 ou 2, caractérisé en ce qu'on donne à la couche sans agent de formation d'alvéoles une épaisseur de 5 à 12 mm.

4. Procédé selon l'une des revendications 1 à 3, caractérisé en ce que pour sécher le produit, on le chauffe à une température de de 30 à 120°C pendant un temps qui augmente avec l'épaisseur, et qui est de l'ordre de 1 jour pour un produit d'épaisseur totale 40 mm et ayant une couche dépourvue d'agent de formation de pores sur deux faces opposées, et de l'ordre de 20 jours pour un produit analogue d'épaisseur totale 70 mm à une température de 35°C.

5. Procédé selon l'une des revendications 1 à 3, caractérisé en ce que pour sécher le produit, on le chauffe à une température de 30 à 120°C en utilisant une technique de chauffage par micro-onde.

6. Produit céramique allégé, isolant, imperméable obtenu conformément au procédé selon l'une quelconque des revendications 1 à 5.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | DE-C- 25 109 (J. LYNCH) <br> * Page 1, colonne de gauche, lignes 15-31 et colonne de droite, lignes 1-3 * | 1,2,6 | B 32 B 18/00 <br> B 28 B 1/26 <br> C 04 B 38/00 |
| | --- | | |
| Y | FR-A-2 095 532 (IDEAL-STANDARD) <br> * Page 3, lignes 7-27 * | 1,2,6 | |
| | --- | | |
| A | F. SINGER et al.: "Industrial ceramics", 1963, pages 754-767, Chapman & Hall Ltd., Londres, GB; <br> * Page 754, dernier paragraphe - page 755, ligne 3; Page 766, avant-dernière ligne - page 767, ligne 6; figure 8.32 * | 2 | |
| | ----- | | |

**DOMAINES TECHNIQUES RECHERCHES (Int. Cl.4)**

C 04 B 38/00
B 32 B 18/00
C 04 B 33/00
B 28 B 1/00

Le présent rapport de recherche a été établi pour toutes les revendications

| Lieu de la recherche <br> LA HAYE | Date d'achèvement de la recherche <br> 20-12-1984 | Examinateur <br> DAELEMAN P.C.A. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82